# EUROPEAN PATENT APPLICATION

(11) **EP 3 462 814 A1**
(43) Date of publication of application: **03.04.2019**
(21) Application number: 17194158.6
(22) Date of filing: 29.09.2017
(51) Int. Cl.: H05B 6/12

(54) **FERROMAGNETIC ELEMENT FOR INDUCTIVE HEATING OF CONTENTS OF A VESSEL**

(71) Applicant: Vestel Elektronik Sanayi ve Ticaret A.S., 45030 Manisa (TR)
(72) Inventor: ÖZEL, Ahmet, 45030 Manisa (TR)
(74) Representative: Flint, Adam

(57) **Abstract**

A ferromagnetic element (300) is provided for locating within a vessel (220) to heat contents of the vessel (220) by interacting with an induction coil (211) of an inductive cooker (210). The ferromagnetic element (300) is constructed and arranged such that an amount of ferromagnetic material insertable into the vessel (220) is variable so as to accommodate vessels (220) of different size.

## Description

### Technical Field

The present disclosure relates to a ferromagnetic element for inductive heating of contents of a vessel.

### Background

Induction cookers are known in which a varying electric current is passed through an induction coil, the coil therefore producing a corresponding varying electromagnetic field. The varying electromagnetic field induces a varying eddy current in a ferromagnetic cooking vessel or the like when the cooking vessel is placed in close proximity to the induction coil, which in turn heats the cooking vessel and therefore the contents of the cooking vessel. One or more transistors may be used to vary the frequency of supply of current to the induction coil and thereby control the power that is provided to the induction coil.

### Summary

According to an aspect disclosed herein, there is provided a ferromagnetic element for locating within a vessel to heat contents of a said vessel by interacting with an induction coil of an induction cooker, the ferromagnetic element being constructed and arranged such that an amount of ferromagnetic material insertable into a said vessel is variable so as to accommodate vessels of different size.

In an example, the ferromagnetic element comprises a plurality of discrete ferromagnetic portions such that one or more portions can be inserted into a said vessel to vary the amount of ferromagnetic material inserted into a said vessel.

In an example, wherein the plurality of ferromagnetic portions comprises a plurality of concentrically arranged ferromagnetic portions of different lateral extents.

In an example, the concentrically arranged ferromagnetic portions are annular.

In an example, the ferromagnetic element is mounted on a carrier rod for holding the ferromagnetic element within a vessel.

In an example, each ferromagnetic portion is mounted on a carrier rod for holding the respective ferromagnetic portion within the vessel.

There may also be provided apparatus for inductive heating of contents of a vessel, the apparatus comprising a ferromagnetic element as described above and an actuator for inserting an amount of the ferromagnetic material into a vessel.

In an example, the apparatus comprises a sensor for determining a size of a said vessel, the actuator being configured to insert an amount of the ferromagnetic material into a said vessel in accordance with the determined size of a said vessel.

In an example, the apparatus is configured such that the actuator inserts a maximum amount of the ferromagnetic material into a vessel in accordance with the determined size of a said vessel.

There may also be provided in combination, apparatus as described above and an induction cooker.

### Brief Description of the Drawings

To assist understanding of the present disclosure and to show how embodiments may be put into effect, reference is made by way of example to the accompanying drawings in which:
Figure 1 shows schematically an induction cooking system as known in the art; and
Figures 2 to 6 show schematically a number of examples of ferromagnetic elements and their use in accordance with embodiments described herein.

### Detailed Description

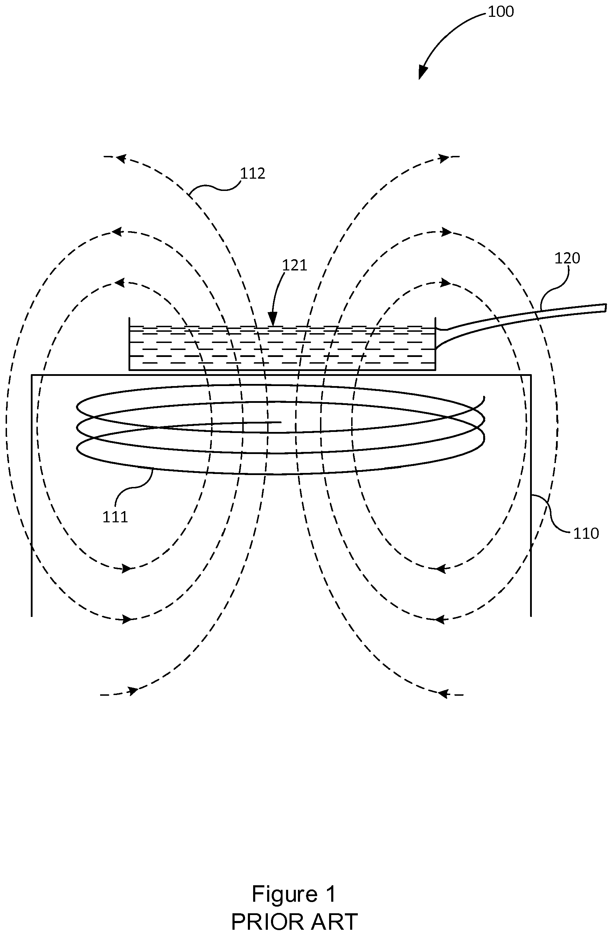

Referring to Figure 1, there is shown an example of a conventional induction cooking system 100 comprising an induction cooker 110 and a ferromagnetic pan 120. The induction cooker 110 has an induction coil 111. A varying electric current is provided to the induction coil 111, which therefore produces a corresponding varying electromagnetic field 112. When the ferromagnetic pan 120 is placed close to the induction coil 111 and therefore in the varying electromagnetic field 112, as shown in Figure 1, corresponding varying eddy currents are induced in the ferromagnetic pan 120, which therefore heat the ferromagnetic pan 120 via resistive heating. In this manner, the (heated) ferromagnetic pan 120 will heat its contents 121 and can therefore be used for cooking, boiling water and other liquids, etc.

Induction cookers, such as the induction cooker 110 shown in Figure 1, are commonly referred to as induction hobs or induction stoves, due to their similarity to traditional gas or electric hobs and stoves.

The induction cooking system 100 described above heats the contents of the cooking vessel, such as the pan 120, because the cooking vessel is ferromagnetic, as only ferromagnetic materials react to the varying magnetic field 112 in the manner described above. This means that a non-ferromagnetic object, such as a ceramic or plastics, etc. mug (cup, beaker, etc.) or the like will not be heated by the induction cooker 110. This therefore precludes users being able to use a non-ferromagnetic vessel in the manner described above.

Embodiments described herein provide a ferromagnetic element for locating within a vessel (e.g. a pan, mug, cup etc.). The ferromagnetic element is made of ferromagnetic material and can therefore be heated by an induction cooker even if the vessel itself cannot. Advantageously, the ferromagnetic element is constructed and arranged such that an amount of ferromagnetic material inserted into the vessel is variable. When located within the vessel, the ferromagnetic element is heated by the induction cooker and therefore acts as a heating element, heating the contents of the vessel.

Advantageously, the amount of the ferromagnetic element placed within the vessel can be changed to allow for maximum heating effect over a variety of different sized vessels. This may comprise maximising the lateral extent of a portion of the ferromagnetic element placed within the vessel, e.g. to substantially cover the base of the vessel.

With this system, the vessel itself does not need to be ferromagnetic. That is, even contents of a non-ferromagnetic vessel (e.g. a ceramic mug) can be heated. This is because the magnetic field of the induction cooker passes through the vessel and acts to heat the ferromagnetic element instead, thereby heating the contents of the vessel. However, it is not excluded that the system be used with a ferromagnetic vessel because, although the vessel itself will be heated by the induction cooker, the ferromagnetic element will act as an additional heating element, thereby decreasing the time required to heat the contents.

In any event, this enables users to use a wide range of vessels to heat contents by use of an induction cooker, even if the vessel itself is not formed of a ferromagnetic material. This flexibility is convenient for users. Moreover, it enables a user to select a vessel having a size (particularly a volume) that is more appropriate for the volume of the contents to be heated. As a particular example, if a user only wants to heat a small volume of liquid, the user can use a correspondingly small vessel. This provides for a much more energy efficient system than the conventional arrangement discussed above in which, in essence, the user is limited to using one of a typically small number of cooking pans which the user may possess and which may all be much larger than is necessary.

The ferromagnetic element may comprise a plurality of discrete ferromagnetic portions which can be lowered into the vessel. The amount of the ferromagnetic element introduced into the vessel may be varied by a user manually, or enacted by one or more actuators. For example, the user or actuator may selectively lower one or more portions of the ferromagnetic element into the vessel.

When an actuator is provided for altering the amount of ferromagnetic element in the vessel, one or more sensors may be provided for detecting the size of the vessel, particularly the lateral extent of the vessel (such as the diameter of a vessel having a circular or approximately circular cross-sectional shape). A controller of the actuator may determine (using the one or more sensors) an available internal size of the vessel, and automatically determine an amount of ferromagnetic element to be introduced to the vessel, the amount have the largest lateral extent possible given the determined internal size.

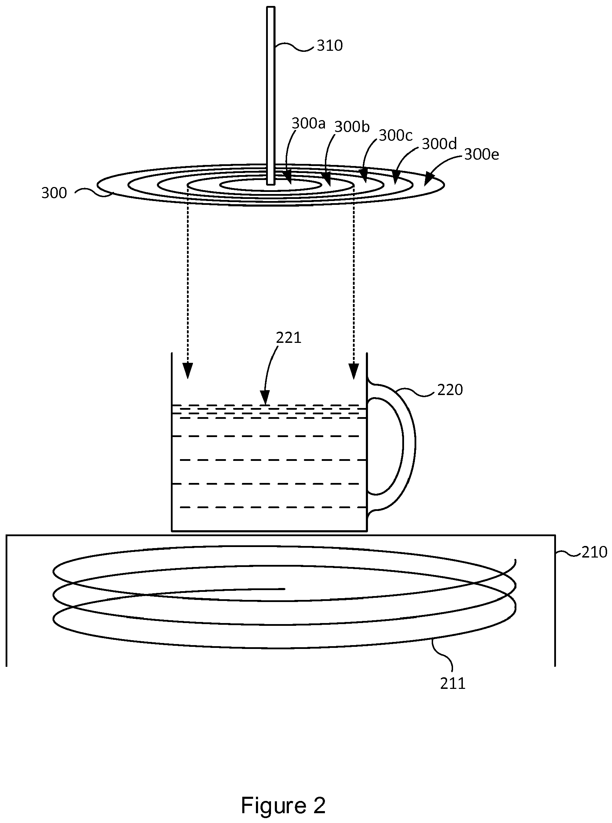

Various constructions of the ferromagnetic element are possible, some examples of which are described below. Additionally, various combinations of (any example of) the ferromagnetic element, actuator, sensor, and controller are possible. These are described below with reference to Figure 2.

Figure 2 shows schematically an example of a ferromagnetic element 300 in accordance with embodiments described herein, an induction cooker 210 and a vessel 220.

The induction cooker 210 may be a standard induction cooker 210 designed to work with ferromagnetic cookware. The induction cooker 210 comprises, therefore, at least an induction coil 211 constructed and arranged to generate a varying magnetic field in response to a varying current which will cause heating of ferromagnetic objects placed on or near the surface of the cooker 210.

The vessel 220 is shown in the example of Figure 2 as a mug (partially) filled with a liquid 221. As mentioned above, the vessel 220 does not need to be made of or comprise any ferromagnetic material. If the vessel 220 is made of ferromagnetic material, it will itself be heated by a magnetic field from the induction coil 211, but this is not required. In any case, the vessel 220 is constructed to hold (retain) solid or liquid contents such as foodstuff, water, tea, coffee, soup, etc. Examples of suitable vessels include cups, mugs, beakers, etc. Materials from which the vessel 220 may be constructed include ceramics, plastics, metals, etc.

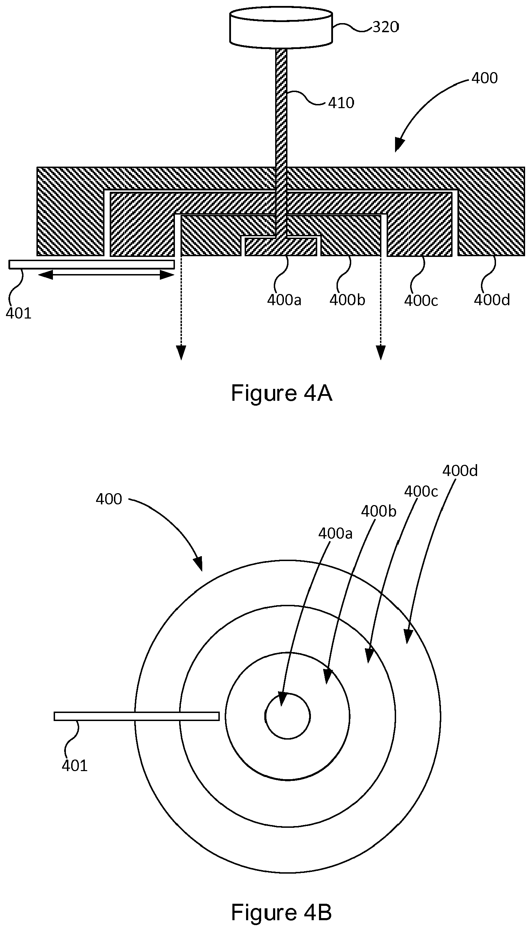

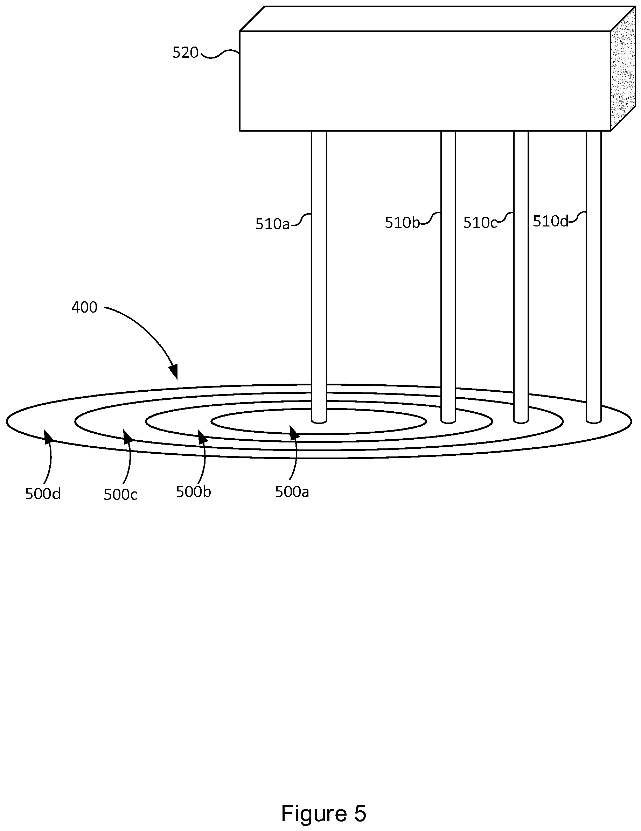

The ferromagnetic element 300 comprises sufficient ferromagnetic material that portions of the ferromagnetic element 300 brought within range of a varying magnetic field generated by the induction coil 211 will be heated sufficiently to heat the contents 221 of the vessel 220. The ferromagnetic element 300 comprises, in this example, a plurality of discrete portions 300a-e. In this example, there is a central portion 300a and four extension portions 300b-e. The central portion 300a is a flat circular disc and the four extension portions 300b-e are each annular rings concentrically arranged with the central potion 300a. The ferromagnetic element 300 is arranged so that one or more of the portions 300a-e can be selectively lowered into the vessel 220 to act as a heating element for the contents 221. The ferromagnetic element 300 may be arranged allow one or more of the portions 300a-e to be selectively lowered manually by a user and/or automatically by some drive arrangement, depending on the embodiment. Many alternative arrangement are possible. In this example a carrier rod 310 is provided attached to at least the central portion 300a. Further examples are described below, for example with reference to Figures 4 and 5.

In one example, a user can selective the amount of the ferromagnetic element 300 that is introduced into the vessel 220 to act as a heating element when interacting with the induction cooker 210. The ferromagnetic element 300 may be arranged such that the user can select a largest workable amount of the ferromagnetic element 300 to be introduced into the vessel 220. That is, a user can for example select and move the portion(s) 300a-e into the vessel 220 to provide the largest surface area or volume for the portions 300a-e of the ferromagnetic element 300 that will fit into the vessel 220. This is advantageous because it maximises the heating effect of the ferromagnetic element 300 in vessel 220, which results in fast heating and also minimises heat losses and is so more efficient.

In the specific example of Figure 2, the two innermost portions 300a, 300b will (simultaneously) fit within the vessel 220 and so the user can introduce these two 300a, 300b into the vessel 220. The remaining portions 300c-e will not fit into the vessel 220 and so are not introduced into the vessel 220. Note that the central portion 300a and the first extension portion 300b would each fit into the vessel 220 individually, but both can be lowered to maximise the surface area/volume of the ferromagnetic portion 300 that is in contact with the contents 221 of the vessel 220.

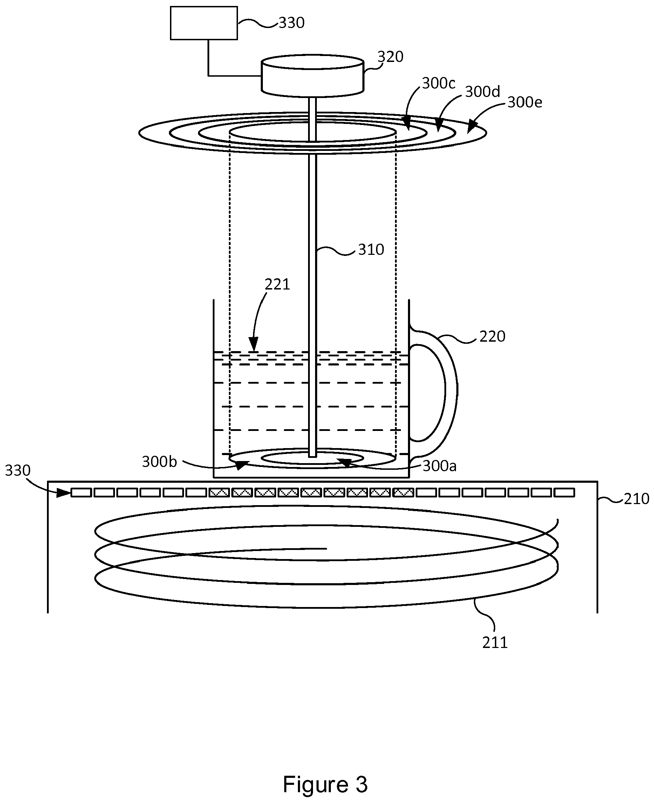

Figure 3 shows an embodiment similar to that of Figure 2, but additionally comprising an actuator 320, an actuator controller 330 and (optional) sensors 330. In this example, the two innermost portions 300a, 300b have been lowered into the vessel 220 and therefore comprise a portion of the ferromagnetic element 300 currently arranged to be heated by the induction cooker 210. The remaining portions 300c-e have not been introduced into the vessel 220, and are sufficiently far from the induction coil 211 that they will not be (substantially) heated by the induction cooker 210.

The actuator controller 330 is operatively coupled to the actuator 320 and configured to control the actuator 320 in accordance with examples described herein. The controller 330 may be implemented as code running on a processor. However, the controller 330 may alternatively be implemented using dedicated hardware or a combination of hardware and software. The actuator 320, the actuator controller 330 and the ferromagnetic element 300 may be mounted on some frame (not shown) associated with or in the neighbourhood of the induction cooker 210 so that the ferromagnetic element 300 is located above the induction cooker 210.

The actuator 320 shown in Figure 3 is operatively coupled to the ferromagnetic element 300 via, in this example, the carrier rod 310. The actuator 320 is constructed and arranged to selectively introduce one or more portions 300a-e of the ferromagnetic element 300 into the vessel 220.

The actuator 320 may lower one or more portions 300a-e of the ferromagnetic element 300 to a point near, but not in contact with, the base of the vessel 220. This is to avoid direct transfer of heat from the lowered portions 300a-e of the ferromagnetic element 300 to the vessel itself 220. Alternatively or additionally, the lowermost faces of the portions 300a-e of the ferromagnetic element 300 may be coated with a thermally insulating material to prevent direct transfer of heat to the vessel 220 in the case that the portions 300a-e of the ferromagnetic element 300 contact the base of the vessel 220.

The surface of the cooker 210 may have markings to indicate to the user where to place the vessel 220 so that it is axially aligned with the carrier rod 310, or in any case placed in an appropriate position such that portion(s) 300a-e of the ferromagnetic element 300 lowered by the actuator 320 will lower into the vessel 220.

The one or more sensors 330 may be provided for detecting the size of the vessel 220. The sensors 330 may be presence or proximity sensors arranged on, at or underneath the surface of the induction cooker 210 onto which the vessel 220 is placed. For example, an array of sensors 330 may be arranged as shown in Figure 3 underneath the surface, with each sensor 330 being arranged to generate an output indicative of whether an object is present at a corresponding location on the cooker surface. In this particular example shown, the central nine sensors 330 indicate presence of an object. This is communicated to the controller 330 which determines the size of the vessel 220 based on the received sensor signal(s). The controller 300 then determines a maximum size for a heating element which can fit into the vessel 220 based on the determined vessel size and controls the actuator 320 to insert one or more portions 300a-e of the ferromagnetic element 300 having an overall size no bigger than the determined maximum size.

Other sensor 330 arrangements are possible. For example, a single sensor 330 such as a camera may be used. In this example, the camera may be placed above the surface of the cooker 210 such that an image captured by the camera includes a view of the top opening of the vessel 220. Known image processing methods can then be used to determine the size, particularly the lateral extent such as the diameter, of the vessel 220 from an image captured by the camera.

Using the sensor 330, or additional sensors not shown in the Figures, the controller 330 may also be configured to determine the location of the vessel 220. In these cases, the actuator 320 may be configured to move the ferromagnetic element 300 laterally in order to facilitate introduction of one or more portions 300a-e into the vessel 220.

The particular construction and arrangement of the ferromagnetic element 300 shown in Figure 3 is only one example, and other arrangements are possible. For example, Figures 4A and 4B respectively show a partially sectioned side view and a view from below of an alternative ferromagnetic element 400 comprising four portions 400a-d. A central one 400a of the portions is fixedly connected to a carrier rod 410. The other portions 400b-d sit on top of the central portion 400a and may move up and down the carrier rod 410 freely. A retaining member 401 is provided underneath the ferromagnetic element 400. The retaining member 401 can be extended and retracted to be located underneath some or all of the other portions 400b-d. Hence, when the central portion 400a is lowered via the carrier rod 410, some or all of the other portions 400b-d will also lower, depending on the position of the retaining member 401.

The example of Figure 4 required only a single carrier rod 410. This is advantageous as the carrier rod 410 will also take up volume within the vessel 220 when lowered, reducing the volume of the vessel 220 usable for contents. However, it is also possible to have multiple carrier rods. For example, in the alternative ferromagnetic element 500 shown in Figure 5, the ferromagnetic element 500 comprises a central flat disc 500a surrounded by a plurality of concentrically arranged flat annular rings 500b-d. Each of the portions 500a-d is fixedly attached to a respective carrier rod 510a-d. The actuator 520 in this case is constructed and arranged to selectively lower one or more of the portions 500a-d directly by moving the corresponding one or more carrier rods 510a-d.

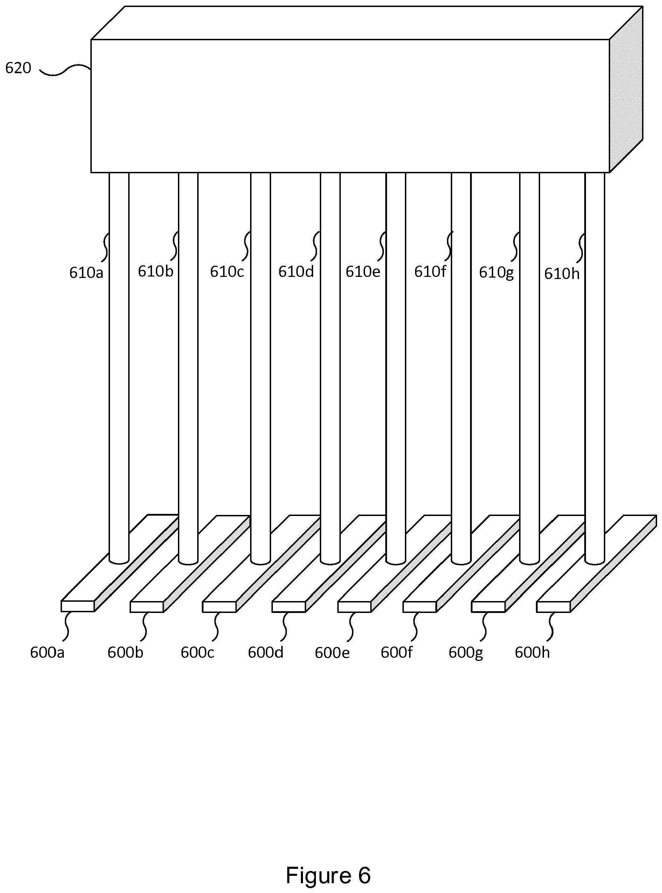

The above examples included circularly-symmetric portions of the ferromagnetic element. This is advantageous due to the ubiquity of circularly-shaped vessels. However, the portions need only fit within a vessel, so do not need to be circularly-symmetric. Figure 6 illustrates an example of this. In this example, a plurality of portions 600a-h are provided, the position of each of which is controllable by the actuator 620 via a respective carrier rod 610a-h. Each portion 600a-h is a horizontal bar of ferromagnetic material. The controller in this case controls the actuator 620 to selectively lower as many portions 600a-e as will fit in the vessel 220.

It is appreciated that the above has been described with reference to example embodiments only, and that other embodiments are possible.

As a first example, the controller 330 may be operatively coupled to the cooker 210 itself. In this case, the controller 330 may control the cooker 210 to turn on to begin generating the varying electromagnetic field via the coil 211 in response to the controller 330 controlling the actuator 320 to place one or more portions of the ferromagnetic element 300 into the vessel 220. Similarly, the controller 330 may automatically turn off the cooker 210 in response to removing the ferromagnetic element 300 from the vessel.

As a second example, a temperature sensor may be provided for detecting the temperature of the contents 221 of the vessel 220. The temperature sensor may for example be integrated into a portion 300a-e of the ferromagnetic element 300, such as the central portion 300a in the example of Figure 3, or may be a separate temperature sensor such as a thermal imaging sensor integrated with the camera described above. In any case, the controller 330 may be operatively coupled to the temperature sensor and thereby configured to monitor the temperature of the contents 221 of the vessel 220. The controller 330 may be configured to automatically remove the one or more portions 300a-e of the ferromagnetic element 300 in response to the detected temperature of the contents 221 reaching a threshold level. This may be for example when water in the vessel 220 begins to boil (at 100°C).

As a third example, the controller 330 may be configured to, via the actuator 320, move the one or more portions 300a-e placed within the vessel during heating (i.e. whilst the cooker 210 is "on") to create movement of the contents 221. This may comprise moving the portions 300a-e up and down (i.e. slightly raising and lowering the portions 300a-e within the vessel repeatedly) and/or side to side. Alternatively or additionally, the actuator 320 may be arranged to rotate the portions 300a-e. In this latter example, the controller 330 may control the actuator 320 to "stir" the contents 221 during heating.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A ferromagnetic element for locating within a vessel to heat contents of a said vessel by interacting with an induction coil of an induction cooker, the ferromagnetic element being constructed and arranged such that an amount of ferromagnetic material insertable into a said vessel is variable so as to accommodate vessels of different size.

2. A ferromagnetic element according to claim 1, wherein the ferromagnetic element comprises a plurality of discrete ferromagnetic portions such that one or more portions can be inserted into a said vessel to vary the amount of ferromagnetic material inserted into a said vessel.

3. A ferromagnetic element according to claim 2, wherein the plurality of ferromagnetic portions comprises a plurality of concentrically arranged ferromagnetic portions of different lateral extents.

4. A ferromagnetic element according to claim 3, wherein the concentrically arranged ferromagnetic portions are annular.

5. A ferromagnetic element according to any of claims 1 to 4, wherein the ferromagnetic element is mounted on a carrier rod for holding the ferromagnetic element within a vessel.

6. A ferromagnetic element according to any of claims 2 to 4, wherein each ferromagnetic portion is mounted on a carrier rod for holding the respective ferromagnetic portion within the vessel.

7. Apparatus for inductive heating of contents of a vessel, the apparatus comprising a ferromagnetic element according to any of claims 1 to 6 and an actuator for inserting an amount of the ferromagnetic material into a vessel.

8. Apparatus according to claim 7, comprising a sensor for determining a size of a said vessel, the actuator being configured to insert an amount of the ferromagnetic material into a said vessel in accordance with the determined size of a said vessel.

9. Apparatus according to claim 8, configured such that the actuator inserts a maximum amount of the ferromagnetic material into a vessel in accordance with the determined size of a said vessel.

10. In combination, apparatus according to any of claims 7 to 9 and an induction cooker.
